# EUROPEAN PATENT APPLICATION

(11) **EP 4 550 907 A1**
(43) Date of publication of application: **07.05.2025**
(21) Application number: 22948647.7
(22) Date of filing: 30.06.2022
(51) Int. Cl.: H04W 72/04, H04W 24/02, H04W 72/00

(54) **INFORMATION REPORTING AND RECEPTION METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2022/103184
(87) International publication number: WO 2024/000545

(57) **Abstract**

The present invention provides an information reporting and reception method and apparatus, and a storage medium, wherein the information reporting method comprises: reporting specified information; wherein the specified information is associated with one or more units of characteristics information available for random access (RA). In the present invention, a terminal can report specified information associated with one or more units of characteristics information available for RA, and a subsequent network side device can optimize RA resource configuration according to terminal requirements, and availability is high.

## Description

### FIELD

The present invention relates to the field of communications, in particular to a method and apparatus for reporting information, a method and apparatus for receiving information, and a storage medium.

### BACKGROUND

In the release 17 (R17), in order to enable a network-side device to recognize R17 features at an early stage to allow the network-side device to provide a corresponding reasonable configuration subsequently, a specific random access (RA) partition is configured for a plurality of features or feature combinations. A terminal initiates a random access based on a specific RA partition resource, and the network-side device may recognize the features or the feature combination at the early stage by recognizing the RA partition resource selected by the terminal.

However, due to limitations of a random access resource and an actual network deployment, the network-side device may not provide specific RA partitions for all feature combinations, that is, for some feature combinations, there is no corresponding RA partition. In this case, the terminal will perform an RA partition selection based on a feature priority configured by the network, to ensure that there is an RA partition corresponding to high-priority feature(s). That is, the RA partition finally selected by the terminal may not necessarily support all the features or the feature combinations applicable to this RA.

### SUMMARY

In order to overcome problems existing in the related art, embodiments of the present invention provide a method and apparatus for reporting information, a method and apparatus for receiving information, and a storage medium.

According to a first aspect of an embodiment of the present invention, a method for reporting information is provided, which is performed by a terminal and includes: reporting specified information. The specified information is associated with one or more pieces of feature information available for a random access (RA).

Optionally, reporting the specified information includes at least one of: reporting availability indication information in a case that the terminal has one or more pieces of the feature information available for the RA; in which the availability indication information is used to indicate that the terminal has one or more pieces of the feature information available for the RA; or reporting one or more pieces of the feature information available for the RA in a case that the terminal has one or more pieces of the feature information available for the RA.

Optionally, reporting the availability indication information includes: the terminal entering a connected state and reporting the availability indication information via a first message; or reporting the availability indication information via a second message.

Optionally, the first message is one of: a radio resource control (RRC) connection establishment complete message; an RRC reconfiguration complete message; an RRC re-establishment complete message; or an RRC recovery complete message.

Optionally, the second message is one of: a terminal assistance information message; a medium access control control element (MAC CE); or a record report.

RARARA Optionally, the method further includes: reporting a null report in a case that the terminal does not have one or more pieces of the feature information available for the RA.

Optionally, the method further includes: receiving a reporting request message. The reporting request message is used to request the terminal to report one or more pieces of the feature information available for the RA.

Optionally, reporting one or more pieces of the feature information available for the RA includes: reporting one or more pieces of the feature information available for the RA based on the reporting request message.

Optionally, the method further includes: reporting capability indication information. The capability indication information is used to indicate whether the terminal supports recording and reporting one or more pieces of the feature information available for the RA.

Optionally, receiving the reporting request message includes: receiving the reporting request message sent by a network-side device in a case that the terminal supports recording and reporting one or more pieces of the feature information available for the RA.

Optionally, one or more pieces of the feature information available for the RA is random feature information available for the RA, or specified feature information available for the RA.

Optionally, reporting one or more pieces of the feature information available for the RA includes at least one of: reporting random feature information available for the RA; reporting specified feature information available for the RA; reporting all feature information available for the RA; or reporting feature information that is not supported by an RA resource selected by the terminal.

Optionally, the feature information includes at least one of: a small data transmission

(SDT); a reduced capability (RedCap) device; a radio access network (RAN) slicing; or a coverage enhancement (CE).

Optionally, the RAN slicing includes at least one of: feature information used to indicate that a feature is the RAN slicing; or identification information used to identify the RAN slicing.

According to a second aspect of an embodiment of the present invention, a method for receiving information is provided, which is performed by a network-side device and includes: receiving specified information; in which the specified information is associated with one or more pieces of feature information available for a random access (RA).

Optionally, receiving the specified information includes at least one of: receiving availability indication information reported by a terminal in a case that the terminal has one or more pieces of the feature information available for the RA; in which the availability indication information is used to indicate that the terminal has one or more pieces of the feature information available for the RA; or receiving one or more pieces of the feature information available for the RA reported by a terminal in a case that the terminal has one or more pieces of the feature information available for the RA.

Optionally, receiving the availability indication information reported by the terminal in a case that the terminal has one or more pieces of the feature information available for the RA includes: receiving the availability indication information reported by the terminal via a first message in a case that the terminal has one or more pieces of the feature information available for the RA and the terminal enters a connected state; or receiving the availability indication information reported by the terminal via a second message in a case that the terminal has one or more pieces of the feature information available for the RA.

Optionally, the first message is one of: an RRC connection establishment complete message; an RRC reconfiguration complete message; an RRC re-establishment complete message; or an RRC recovery complete message.

Optionally, the second message is one of: a terminal assistance information message; a medium access control control element (MAC CE); or a record report.

Optionally, the method further includes: receiving a null report reported by the terminal in a case that the terminal does not have one or more pieces of the feature information available for the RA.

Optionally, the method further includes: sending a reporting request message. The reporting request message is used to request the terminal to report one or more pieces of the feature information available for the RA.

Optionally, receiving one or more pieces of the feature information available for the RA includes: receiving one or more pieces of the feature information available for the RA reported by the terminal based on the reporting request message.

Optionally, the method further includes: receiving capability indication information. The capability indication information is used to indicate that the terminal supports recording and reporting one or more pieces of the feature information available for the RA.

Optionally, sending the reporting request message includes: sending the reporting request message in response to the terminal supports recording and reporting one or more pieces of the feature information available for the RA.

Optionally, one or more pieces of the feature information available for the RA is random feature information available for the RA, or specified feature information available for the RA.

Optionally, receiving one or more pieces of the feature information available for the RA reported by the terminal in a case that the terminal has one or more pieces of the feature information available for the RA includes at least one of: receiving random feature information available for the RA reported by the terminal in a case that the terminal has one or more pieces of the feature information available for the RA; receiving specified feature information available for the RA reported by the terminal in a case that the terminal has one or more pieces of the feature information available for the RA; receiving all feature information available for the RA reported by the terminal in a case that the terminal has one or more pieces of the feature information available for the RA; or receiving feature information reported by the terminal that is not supported by an RA resource selected by the terminal in a case that the terminal has one or more pieces of the feature information available for the RA.

Optionally, the feature information includes at least one of: a small data transmission (SDT); a reduced capacity (RedCap) device; a radio access network (RAN) slicing; or a coverage enhancement (CE).

Optionally, the RAN slicing includes at least one of: feature information used to indicate that a feature is the RAN slicing; or identification information used to identify the RAN slicing.

According to a third aspect of an embodiment of the present invention, an apparatus for reporting information is provided, which is applied to a terminal and includes: a reporting module configured to report specified information. The specified information is associated with feature information available for a random access (RA).

According to a fourth aspect of an embodiment of the present invention, an apparatus for receiving information is provided, which is applied to a network-side device and includes: a receiving module configured to receive specified information. The specified information is associated with feature information available for a random access (RA).

According to a fifth aspect of an embodiment of the present invention, a computer-readable storage medium is provided, which has stored therein a computer program that is configured to execute any one of the above methods for reporting the information.

According to a sixth aspect of an embodiment of the present invention, a computer-readable storage medium is provided, which has stored therein a computer program that is configured to execute any one of the above methods for receiving the information.

According to a seventh aspect of an embodiment of the present invention, a device for reporting information is provided, which included: a processor; and a memory for storing instructions executable by the processor. The processor is configured to execute any one of the above methods for reporting the information.

According to a first aspect of an embodiment of the present invention, a device for receiving information is provided, which included: a processor; and a memory for storing instructions executable by the processor. The processor is configured to execute any one of the above methods for receiving the information.

The technical solutions provided in embodiments of the present invention may include following advantageous effects.

In embodiments of the present invention, the terminal may report the specified information. The specified information is associated with one or more pieces of feature information available for a random access (RA), and the network-side device may subsequently optimize an RA resource configuration according to requirements of the terminal, which has a high availability.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with the disclosure and, together with the description, serve to explain the principles of the present invention.
FIG. 1 is a schematic flowchart showing a method for reporting information according to an illustrative embodiment.
FIG. 2 is a schematic flowchart showing a method for reporting information according to another illustrative embodiment.
FIG. 3Ais a schematic flowchart showing a method for reporting information according to a further illustrative embodiment.
FIG. 3B is a schematic flowchart showing a method for reporting information according to a further illustrative embodiment.
FIG. 4 is a schematic flowchart showing a method for reporting information according to a further illustrative embodiment.
FIG. 5 is a schematic flowchart showing a method for receiving information according to an illustrative embodiment.
FIG. 6 is a schematic flowchart showing a method for receiving information according to another illustrative embodiment.
FIG. 7A is a schematic flowchart showing a method for receiving information according to a further illustrative embodiment.
FIG. 7B is a schematic flowchart showing a method for receiving information according to a further illustrative embodiment.
FIG. 8 is a schematic flowchart showing a method for receiving information according to a further illustrative embodiment.
FIG. 9 is a block diagram showing an apparatus for reporting information according to an illustrative embodiment.
FIG. 10 is a block diagram showing an apparatus for receiving information according to an illustrative embodiment.
FIG. 11 is a schematic block diagram showing a device for reporting information according to an illustrative embodiment of the present invention.
FIG. 12 is a schematic block diagram showing a device for receiving information according to an illustrative embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used in the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. As used herein, the term "if" may be construed to mean "when" or "upon" or "in response to determining" depending on the context.

The processes of performing an RA resource collection (or partition) by a terminal are as follows.

In step 1, a feature or a feature combination available for this RA is determined.

In embodiments of the present invention, the feature or the feature combination available for the RA includes at least one of: a small data transmission (SDT); a reduced capability (RedCap) device; a radio access network (RAN) slicing; a coverage enhancement (CE).

The CE is determined based on a resource configuration and a message 3 reference signal receiving power threshold value (rsrp-ThresholdMsg3). It is assumed that the CE is available for a current RA in a case that RA resources for the CE and non-CE are configured on a selected bandwidth part (BWP) and a reference signal receiving power (RSRP) is lower than the rsrp-ThresholdMsg3, or only RA resources for the CE are configured. An applicability of the SDT is determined based on a medium access control (MAC) entity, an applicability of the RAN slicing is determined by upper layer initiation, and an applicability of the RedCap is also based on upper layer initiation and is applicable to the RA initiated by a physical downlink control channel (PDCCH) order, that is, a contention-free random access (CFRA), or any RA initiated by the MAC.

In step 2, whether an available RA resource exists for a feature or a feature combination available for this RA is determined. In a case that no available RA resource exists, a legacy RA resource (i.e., an RA resource that is not associated with any feature indication) is selected. In a case that one available RA resource exists, this RA resource is selected. In a case that a plurality of available RA resources exist, a resource selection is performed based on a feature priority configured by the network.

In particular, for a CFRA process of the RedCap UE, in order to ensure that a network side may always identify the RedCap UE, in a case that a network is configured with an RA resource that only contains a feature indication of the RedCap, an initialization of a CFRA parameter of the RA resource and the CFRA fallback to a contention-based random access (CBRA) both are performed based on parameters in an RA resource configuration.

Currently, an information reporting related to an R17 RA partition is not supported. In order to solve this technical problem, the present invention provides a method and an apparatus for reporting information, a method and an apparatus for receiving information, and a storage medium. The terminal may report specified information associated with feature information available for the RA, and the network-side device may subsequently optimize the RA resource configuration according to requirements of the terminal, which has a high availability.

In the following, the method for reporting the information provided in the present invention is first introduced from a terminal side.

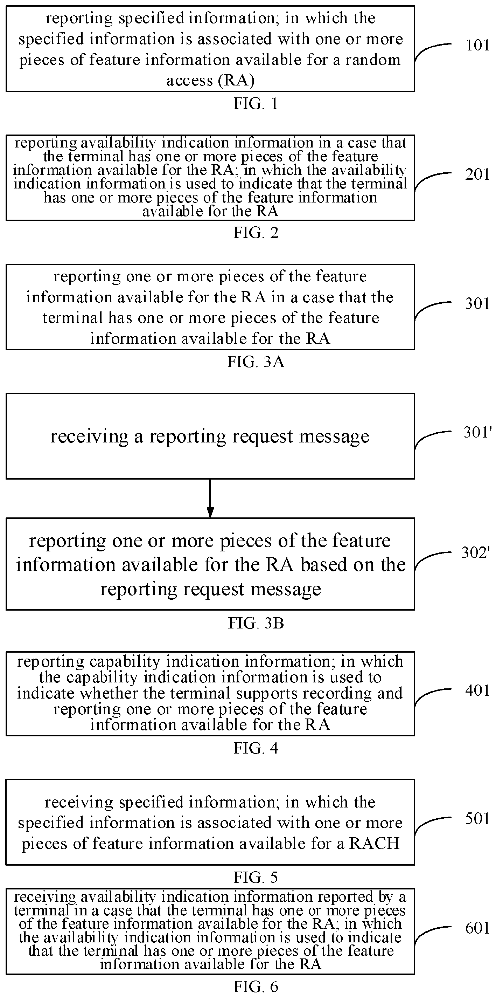

A method for reporting information is provided in an embodiment of the present invention, referring to FIG. 1. FIG. 1 is a flow chart showing a method for reporting information according to an embodiment, which may be performed by a terminal and may include a following step.

In step 101, specified information is reported. The specified information is associated with one or more pieces of feature information available for a random access (RA).

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be a network slice as group (NSAG) identifier, a radio access network slicing identifier, etc. The radio access network slicing identifier may be single network slice selection assistance information (S-NSSAI) or network slice selection assistance information (NSSAI), which is not limited in the present invention.

In a possible implementation, one or more pieces of the feature information available for the RA (or called feature applicable to the RA) may be random feature information available for the RA, or specified feature information available for the RA.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

For example, the feature information available for the RA includes the RAN slicing and the CE, and the feature information supported by the RA ultimately initiated by the terminal may be the CE.

In an embodiment of the present invention, the terminal may report the specified information to a network-side device. The network-side device includes any network-side node, for example, the network-side node may be a core network (CN) side node, an RAN-side node, etc., and which is not limited in the present invention.

In the above embodiments, the terminal may report the specified information associated with one or more pieces of the feature information available for the RA, and the network-side device may subsequently optimize an RA resource configuration according to requirements of the terminal, which has a high availability.

In some optional embodiments, referring to FIG. 2, which is a flow chart showing a method for reporting information according to an embodiment. The method may be performed by a terminal and may include a following step.

In step 201, availability indication information is reported in a case that the terminal has one or more pieces of the feature information available for the RA. The availability indication information is used to indicate that the terminal has one or more pieces of the feature information available for the RA. In an embodiment of the present invention, the terminal having one or more pieces of the feature information available for the RA means that the terminal has one or more pieces of available feature information for the RA, or the terminal has recorded one or more pieces of the feature information available for the RA. At this time, the terminal may report the availability indication information.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

In a possible implementation, one or more pieces of the feature information available for the RA may be random feature information available for the RA, or specified feature information available for the RA.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

In an embodiment of the present invention, the terminal may report the availability indication information to a network-side device. The network-side device includes any network-side node, for example, the network-side node may be a CN-side node, an RAN-side node, etc., and which is not limited in the present invention.

In a possible implementation, the terminal may report the availability indication information based on each RA attempt.

In another possible implementation, the terminal may report the availability indication information based on each RA process. The each RA process includes a plurality of RA attempt processes.

In another possible implementation, the terminal may report the availability indication information based on each feature or each feature combination.

In a possible implementation, in a case that the terminal has one or more pieces of available feature information for the RA, or the terminal has recorded feature information available for the RA, the terminal enters a connected state and the terminal may report the availability indication information via a first message.

Optionally, the first message is one of: an RRC connection establishment complete message; an RRC reconfiguration complete message; an RRC re-establishment complete message; or an RRC recovery complete message.

In another possible implementation, the terminal may report the availability indication information via a second message in a case that the terminal has one or more pieces of available feature information for the RA or the terminal has recorded feature information available for the RA.

After recording the feature information available for the RA, the terminal may report the availability indication information via the second message based on a first RA attempt, each RA attempt or each RA process.

Optionally, in order to prevent the terminal from frequently reporting the availability indication information, a prohibit timer may be introduced. The prohibit timer is started when the terminal sends an availability indication information reporting. The terminal may subsequently trigger a new availability indication information reporting only in a case that the prohibit timer is not working. A timing duration of the prohibit timer may be agreed upon by a protocol or configured by a network side, which is not limited in the present invention.

Optionally, the second message is one of: a terminal assistance information (UEAssistanceInformation) message; a medium access control control element (MAC CE); or a record report.

The terminal may report the availability indication information via the UEAssistanceInformation message.

If the terminal reports the availability indication information via the MAC CE, the terminal may instruct an MAC layer to send the MAC CE via a radio resource control (RRC) layer. If the MAC CE has no corresponding available uplink resource, the MAC CE may trigger a scheduling request (SR). It is also possible for the MAC CE to not trigger the SR, that is, the terminal no longer sends the availability indication information via the MAC CE.

It should be noted that a priority of the MAC CE configured to send the availability indication information may be lower than a buffer status report (BSR) MAC CE.

The terminal may reuse any record report in the related art, and the availability indication information is carried in a corresponding record report in a case that the record report is reported. For example, the terminal reports the availability indication information in a case that a radio link failure-report (RLF-report) reporting is performed.

In the above embodiments, the terminal may report the availability indication information, and the availability indication information is used to indicate that the terminal has one or more pieces of the feature information available for the RA. The availability indication information allows the network-side device to determine that the terminal has one or more pieces of the feature information available for the RA, so that the network-side device configures one or more pieces of the feature information available for the RA reported by the terminal, which has a high availability.

In some optional embodiments, referring to FIG. 3A, which is a flow chart showing a method for reporting information according to an embodiment. The method may be performed by a terminal and may include a following step.

In step 301, one or more pieces of the feature information available for the RA is reported in a case that the terminal has one or more pieces of the feature information available for the RA.

In an embodiment of the present invention, the terminal having one or more pieces of the feature information available for the RA means that the terminal has one or more pieces of available feature information for the RA, or the terminal has recorded one or more pieces of the feature information available for the RA. At this time, the terminal may report one or more pieces of the feature information available for the RA.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

In a possible implementation, one or more pieces of the feature information available for the RA may be random feature information available for the RA, or specified feature information available for the RA.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

In an embodiment of the present invention, the terminal may directly report one or more pieces of the feature information available for the RA to a network-side device. The network-side device includes any network-side node, for example, the network-side node may be a CN-side node, an RAN-side node, etc., and which is not limited in the present invention.

In a possible implementation, the terminal has one or more pieces of available feature information for the RA, or the terminal has recorded one or more pieces of the feature information available for the RA. At this time, the terminal may report the availability indication information, and the RA terminal reports one or more pieces of the feature information available for the RA.

In another possible implementation, the terminal may report a null report in a case that the terminal does not have one or more pieces of the feature information available for the RA. The terminal not having one or more pieces of the feature information available for the RA means that the terminal does not have one or more pieces of available feature information for the RA, or the terminal does not have recorded one or more pieces of the feature information available for the RA.

In a possible implementation, one or more pieces of the feature information available for the RA reported by the terminal may be random feature information available for the RA. As long as the terminal has one or more pieces of available feature information for the RA or has recorded feature information available for the RA, the feature information available for the RA may be reported.

In another possible implementation, one or more pieces of the feature information available for the RA reported by the terminal may be specified feature information available for the RA. The specified feature information available for the RA may be determined by the terminal itself.

It should be noted that one or more pieces of the feature information available for the RA reported by the terminal may be completely matched with the specified feature information available for the RA.

For example, the specified feature information available for the RA determined by the terminal is the SDT and the CE, and the terminal reports the SDT and the CE.

Alternatively, one or more pieces of the feature information available for the RA reported by the terminal may at least include the specified feature information available for the RA.

For example, the specified feature information available for the RA determined by the terminal is the SDT and the CE, and the terminal reports the feature information at least including the SDT and the CE, for example, the reported feature information may include the SDT, the CE and the RedCap.

Alternatively, one or more pieces of the feature information available for the RA reported by the terminal may include at least part of the specified feature information available for the RA.

For example, the specified feature information available for the RA determined by the terminal is the SDT and the CE, and the terminal reports feature information including the SDT and/or the CE. For example, the feature information reported by the terminal includes the SDT and the RedCap, and/or the CE and the RAN slicing.

In another possible implementation, one or more pieces of the feature information available for the RA reported by the terminal may be all feature information available for the RA.

For example, all feature information available for the RA reported by the terminal are the SDT and the CE.

In another possible implementation, one or more pieces of the feature information available for the RA reported by the terminal may be feature information not supported by the RA selected by the terminal, that is, feature information not supported by the RA ultimately initiated.

For example, all feature information available for the RA are the SDT and the CE, feature information supported by an RA resource ultimately initiated is the SDT, and one or more pieces of the feature information available for the RA reported by the terminal is the feature information CE not supported by the RA selected by the terminal.

In the above embodiments, the terminal may directly report one or more pieces of the feature information available for the RA, and the network-side device may subsequently optimize an RA resource configuration according to requirements of the terminal, which has a high availability.

In some optional embodiments, referring to FIG. 3B, which is a flow chart showing a method for reporting information according to an embodiment. The method may be performed by a terminal and may include the following steps.

In step 301', a reporting request message is received.

In an embodiment of the present invention, the reporting request message is used to request the terminal to report one or more pieces of the feature information available for the RA.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing.

In a possible implementation, one or more pieces of the feature information available for the RA may be random feature information available for the RA, or specified feature information available for the RA. The identification information may be an NSAG identifier, a radio access network slicing identifier, etc. The radio access network slicing identifier may be an S-NSSAI or an NSSAI, which is not limited in the present invention.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

In an embodiment of the present invention, the reporting request message may be sent by a network-side device to the terminal. The network-side device includes any network-side node, for example, the network-side node may be a CN-side node, an RAN-side node, etc., and which is not limited in the present invention.

In a possible implementation, the network-side device may send the reporting request message to the terminal to request to obtain one or more pieces of the feature information available for the RA in a case that the terminal having one or more pieces of the feature information available for the RA is determined based on the availability indication information reported by the terminal.

Optionally, the reporting request message may be carried in a terminal information request (UEInformationRequest) message.

In a possible implementation, the reporting request message is used to request the terminal to report random feature information available for the RA.

In another possible implementation, the reporting request message may be used to request the terminal to report the specified feature information available for the RA.

In step 302', one or more pieces of the feature information available for the RA is reported based on the reporting request message.

In an embodiment of the present invention, the terminal may report the feature information available for the RA via a terminal information response (UEInformationResponse) message in a case that the reporting request message is carried in the UEInformationRequest message.

In an embodiment of the present invention, the terminal reports one or more pieces of the feature information available for the RA based on the reporting request message in a case that the terminal has one or more pieces of the feature information available for the RA.

In an embodiment of the present invention, the terminal having one or more pieces of the feature information available for the RA means that the terminal has one or more pieces of available feature information for the RA or the terminal has recorded one or more pieces of the feature information available for the RA. At this time, the terminal may report the availability indication information.

In a possible implementation, the reporting request message is used to request the terminal to report random feature information available for the RA. The terminal may report a null report in a case that the terminal does not have one or more pieces of the feature information available for the RA.

In another possible implementation, the reporting request message is used to request the terminal to report the specified feature information available for the RA. The terminal may report a null report in a case that the terminal does not have the specified feature information available for the RA.

In another possible implementation, the reporting request message is used to request the terminal to report random feature information available for the RA. After the terminal receives the reporting request message, the terminal may report random feature information available for the RA recorded by the terminal in a case that the terminal has one or more pieces of the feature information available for the RA.

In another possible implementation, the reporting request message is used to request the terminal to report the specified feature information available for the RA. After the terminal receives the reporting request message, the terminal may also report the recorded random feature information available for the RA even if the terminal does not have the specified feature information available for the RA.

For example, the reporting request message sent by the network-side device requests the terminal to report the specified feature information available for the RA, which is the SDT and the CE. After the terminal receives the reporting request message, the recorded feature information available for the RA includes the RedCap device, and the terminal may report this feature information to the network-side device.

In another possible implementation, the reporting request message is used to request the terminal to report random feature information available for the RA. After receiving the reporting request message, the terminal may report the specified feature information available for the RA, in a case that the terminal has available specified feature information available for the RA or in a case that the terminal has recorded specified feature information available for the RA. The specified feature information available for the RA may be determined by the terminal.

It should be noted that one or more pieces of the feature information available for the RA reported by the terminal may be completely matched with the specified feature information available for the RA determined by the terminal. Alternatively, one or more pieces of the feature information available for the RA reported by the terminal may at least include the specified feature information available for the RA determined by the terminal. Alternatively, one or more pieces of the feature information available for the RA reported by the terminal may include at least part of the specified feature information determined by the terminal.

In another possible implementation, the reporting request message is used to request the terminal to report the specified feature information available for the RA. After receiving the reporting request message, the terminal may report the specified feature information available for the RA in a case that the terminal has the feature information available for the RA specified by the network-side device. The feature information available for the RA specified by the network-side device means that the terminal has available feature information for the RA specified by the network-side device, or the terminal has recorded the specified feature information available for the RA.

It should be noted that one or more pieces of the feature information available for the RA reported by the terminal may be completely matched with the specified feature information available for the RA requested to be reported by the network-side device.

For example, the reporting request message sent by the network-side device requests the terminal to report the specified feature information available for the RA, which is the SDT and the CE, and the terminal reports the SDT and the CE.

Alternatively, specified one or more pieces of the feature information available for the RA reported by the terminal may at least include the specified feature information available for the RA requested to be reported by the network-side device.

For example, the reporting request message sent by the network-side device requests the terminal to report the specified feature information available for the RA, which is the SDT and the CE. The terminal reports the feature information at least including the SDT and the CE. For example, the reported feature information may include the SDT, the CE and the RedCap device. Alternatively, one or more pieces of the feature information available for the RA reported by the terminal may include at least part of the specified feature information available for the RA requested to be reported by the network-side device.

For example, the reporting request message sent by the network-side device requests the terminal to report the specified feature information available for the RA, which is the SDT and the CE, and the terminal reports the feature information including the SDT and/or the CE. For example, one or more pieces of the feature information available for the RA reported by the terminal include the SDT and the RedCap device, and/or the CE and the RAN slicing.

In another possible implementation, the reporting request message is used to request the terminal to report random feature information available for the RA, or the reporting request message is used to request the terminal to report the specified feature information available for the RA. One or more pieces of the feature information available for the RA reported by the terminal may be all feature information available for the RA in a case that the terminal has one or more pieces of the feature information available for the RA.

For example, all feature information available for the RA reported by the terminal are the SDT, the CE, and the RAN slicing.

In another possible implementation, the reporting request message is used to request the terminal to report random feature information available for the RA, or the reporting request message is used to request the terminal to report the specified feature information available for the RA. One or more pieces of the feature information available for the RA reported by the terminal may be feature information not supported by an RA resource selected by the terminal in a case that the terminal has one or more pieces of the feature information available for the RA.

For example, the reporting request message sent by the network-side device requests the terminal to report the specified feature information available for the RA, which is the SDT and the CE, and the terminal reports the feature information not supported by the selected RA resource, which is the CE.

In the above embodiments, the terminal may report the feature information available for the RA based on the reporting request message, and the network-side device may subsequently optimize an RA resource configuration according to requirements of the terminal, which has a high availability.

In some optional embodiments, after successfully reporting the feature information available for the RA, the terminal may immediately release a record stored locally in the terminal, that is, delete the feature information available for the RA that has been successfully reported and recorded by the terminal.

Alternatively, in a case that a last successful reporting of the feature information available for the RA reaches a preset duration, the terminal releases the record stored locally in the terminal, that is, deletes the feature information available for the RA that has been successfully reported and recorded by the terminal. The preset duration may be agreed upon by a protocol or configured by the network-side device. For example, the network-side device may configure the preset duration to 48 hours or other values.

In the above embodiments, the terminal may release locally stored records in time, thereby saving a memory resource of the terminal, which has a high availability.

In some optional embodiments, referring to FIG. 4, which is a flow chart showing a method for reporting information according to an embodiment. The method may be performed by a terminal and may include a following step.

In step 401, capability indication information is reported. The capability indication information is used to indicate whether the terminal supports recording and reporting one or more pieces of the feature information available for the RA.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

In a possible implementation, one or more pieces of the feature information available for the RA may be random feature information available for the RA, or specified feature information available for the RA.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

In an embodiment of the present invention, the capability indication information may be reported to a network-side device, and the capability indication information is used to indicate whether the terminal supports recording and reporting one or more pieces of the feature information available for the RA. The network-side device includes any network-side node, for example, the network-side node may be a CN-side node, an RAN-side node, etc., and which is not limited in the present invention.

In a possible implementation, the network-side device may determine whether to send a reporting request message to the terminal based on the capability indication information reported by the terminal. After receiving the reporting request message sent by the network-side device, the terminal may report one or more pieces of the feature information available for the RA based on the reporting request message. The specific implementation is similar to the above steps 301' to 302' and will not be repeated here.

In another possible implementation, the network-side device may determine that the terminal supports recording and reporting one or more pieces of the feature information available for the RA based on the capability indication information reported by the terminal. Furthermore, the network-side device may receive availability indication information, and the availability indication information is used to indicate that the terminal has one or more pieces of the feature information available for the RA. At this time, the network-side device sends a reporting request message to the terminal. After receiving the reporting request message sent by the network-side device, the terminal may report one or more pieces of the feature information available for the RA based on the reporting request message. The specific implementation is similar to the above steps 301' to 302' and will not be repeated here.

In the above embodiments, the terminal may report the capability indication information, so that the network-side device determines whether the terminal supports recording and reporting the feature information available for the RA. The network-side device may subsequently optimize an RA resource configuration according to the capability and requirement of the terminal, which has a high availability.

In the following, a method for receiving information provided in the present invention is introduced from a network-side device side.

A method for receiving information is provided in an embodiment of the present invention, referring to FIG. 5. FIG. 5 is a flow chart showing a method for receiving information according to an embodiment, which may be performed by a network-side device and may include a following step.

In step 501, specified information is received. The specified information is associated with one or more pieces of feature information available for a random access (RA).

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

In a possible implementation, one or more pieces of the feature information available for the RA (or called feature applicable to the RA) may be random feature information available for the RA, or specified feature information available for the RA.

It should be noted that one or more pieces of the feature information available for the RA may be feature information that triggers the random access, or a feature that a terminal wants to implement an indication in advance via a specific RA resource, which is different from feature information supported by the RA ultimately initiated by the terminal. The feature information supported by the RA ultimately initiated by the terminal may include at least part of the feature information in the feature information available for the RA.

In an embodiment of the present invention, the network-side device includes any network-side node, for example, the network-side node may be a CN-side node, an RAN-side node, etc., and which is not limited in the present invention.

In the above embodiments, the network-side device may receive the specified information associated with one or more pieces of the feature information available for the RA reported by the terminal, and the network-side device may subsequently optimize an RA resource configuration according to requirements of the terminal, which has a high availability.

In some optional embodiments, referring to FIG. 6, which is a flow chart showing a method for receiving information according to an embodiment. The method may be performed by a network-side device and may include a following step.

In step 601, availability indication information reported by a terminal is received in a case that the terminal has one or more pieces of the feature information available for the RA. The availability indication information is used to indicate that the terminal has one or more pieces of the feature information available for the RA.

In an embodiment of the present invention, the terminal having one or more pieces of the feature information available for the RA means that the terminal has one or more pieces of available feature information for the RA, or the terminal has recorded one or more pieces of the feature information available for the RA. At this time, the terminal may report the availability indication information.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

In a possible implementation, one or more pieces of the feature information available for the RA may be random feature information available for the RA, or specified feature information available for the RA.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

In an embodiment of the present invention, the network-side device includes any network-side node, for example, the network-side node may be a CN-side node, an RAN-side node, etc., and which is not limited in the present invention.

In a possible implementation, the network-side device may receive the availability indication information reported by the terminal based on each RA attempt.

In another possible implementation, the network-side device may receive the availability indication information reported by the terminal based on each RA process. The each RA process includes a plurality of RA attempt processes.

In another possible implementation, the network-side device may receive the availability indication information reported by the terminal based on each feature or each feature combination.

In a possible implementation, the network-side device may receive the availability indication information reported by the terminal via a first message in a case that the terminal has one or more pieces of available feature information for the RA or the terminal has recorded the feature information available for the RA, and the terminal enters a connected state.

Optionally, the first message is one of: an RRC connection establishment complete message; an RRC reconfiguration complete message; an RRC re-establishment complete message; or an RRC recovery complete message.

In another possible implementation, the network-side device may receive the availability indication information reported by the terminal via a second message.

The network-side device may receive the availability indication information reported by the terminal via the second message based on a first RA attempt, each RA attempt or each RA process in a case that the terminal has one or more pieces of available feature information for the RA or the terminal has recorded the feature information available for the RA.

Optionally, in order to prevent the terminal from frequently reporting the availability indication information, a prohibit timer may be introduced. The prohibit timer is started in a case that a terminal side sends an availability indication information reporting. A terminal side may subsequently trigger a new availability indication information reporting only in a case that the prohibit timer is not working. A timing duration of the prohibit timer may be agreed upon by a protocol or configured by a network-side device, which is not limited in the present invention.

Optionally, the second message is one of: a UEAssistanceInformation message; an MAC CE; or a record report.

The terminal may report the availability indication information via the UEAssistanceInformation message.

The terminal side may instruct an MAC layer to send the MAC CE via an RRC layer in a case that the terminal reports the availability indication information via the MAC CE. The MAC CE may trigger an SR in a case that the MAC CE has no corresponding available uplink resource. It is also possible for the MAC CE to not trigger the SR, that is, the terminal no longer sends the availability indication information via the MAC CE.

It should be noted that a priority of the MAC CE configured to send the availability indication information may be lower than a BSR MAC CE.

The network-side device may receive any record report reused by the terminal in the related art, and the availability indication information is carried in a corresponding record report in a case that the record report is reported. For example, the terminal reports the availability indication information to the network-side device in a case that the terminal performs an RLF-report reporting.

In the above embodiments, the network-side device may receive the availability indication information, and the availability indication information is used to indicate that the terminal has one or more pieces of the feature information available for the RA. The network-side device may determine that the terminal has one or more pieces of the feature information available for the RA, so that the network-side device configures one or more pieces of the feature information available for the RA reported by the terminal, which has a high availability.

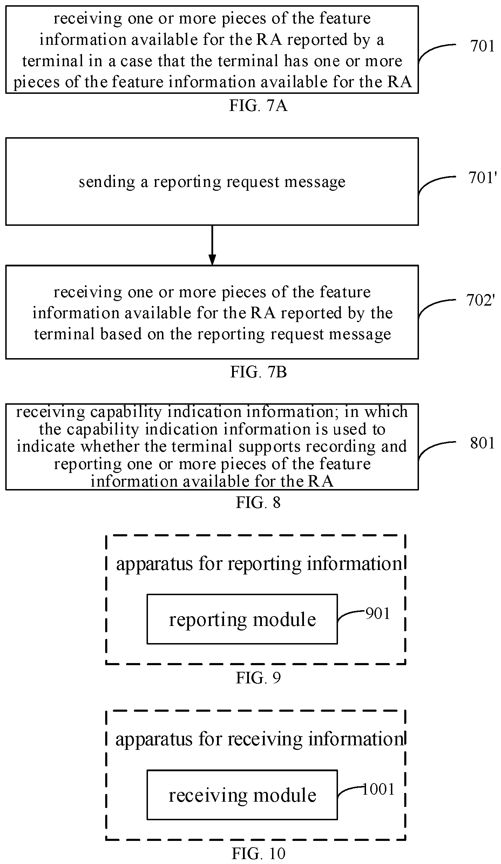

In some optional embodiments, referring to FIG. 7A, which is a flow chart showing a method for receiving information according to an embodiment. The method may be performed by a network-side device and may include a following step.

In step 701, one or more pieces of the feature information available for the RA reported by a terminal is received in a case that the terminal has one or more pieces of the feature information available for the RA.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

In a possible implementation, one or more pieces of the feature information available for the RA may be random feature information available for the RA, or specified feature information available for the RA.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

In an embodiment of the present invention, the network-side device may receive one or more pieces of the feature information available for the RA directly reported by the terminal in a case that the terminal has one or more pieces of the feature information available for the RA. The network-side device includes any network-side node, for example, the network-side node may be a CN-side node, an RAN-side node, etc., and which is not limited in the present invention.

In a possible implementation, the network-side device may receive one or more pieces of the feature information available for the RA reported by the terminal in a case that the terminal has one or more pieces of the feature information available for the RA.

In another possible implementation, the network-side device may receive a null report reported by the terminal in a case that the terminal does not have one or more pieces of the feature information available for the RA.

In a possible implementation, the network-side device may receive random feature information available for the RA reported by the terminal in a case that the terminal has one or more pieces of the feature information available for the RA.

In another possible implementation, the network-side device may receive specified feature information available for the RA reported by the terminal in a case that the terminal has one or more pieces of the feature information available for the RA. The specified feature information available for the RA may be determined by the terminal.

It should be noted that one or more pieces of the feature information available for the RA reported by the terminal may be completely matched with the specified feature information available for the RA determined by the terminal.

For example, the specified feature information available for the RA is the SDT and the CE, and the terminal reports the SDT and the CE.

Alternatively, one or more pieces of the feature information available for the RA reported by the terminal may at least include the specified feature information available for the RA determined by the terminal.

For example, the specified feature information available for the RA is the SDT and the CE, and the terminal reports the feature information at least including the SDT and the CE, for example, the reported feature information may include the SDT, the CE and the RedCap device.

Alternatively, one or more pieces of the feature information available for the RA reported by the terminal may include at least part of the specified feature information available for the RA determined by the terminal.

For example, the specified feature information available for the RA is the SDT and the CE, and the terminal reports feature information including the SDT and/or the CE. For example, the feature information reported by the terminal includes the SDT and the RedCap device, and/or the CE and the RAN slicing.

In another possible implementation, the network-side device may receive all feature information available for the RA reported by the terminal in a case that the terminal has one or more pieces of the feature information available for the RA.

For example, all feature information available for the RA reported by the terminal are the SDT and the CE.

In another possible implementation, the network-side device may receive feature information reported by the terminal that is not supported by the RA selected by the terminal.

For example, all feature information available for the RA are the SDT and the CE, feature information supported by an RA resource selected by the terminal is the SDT, and one or more pieces of the feature information available for the RA reported by the terminal is the feature information CE not supported by the RA ultimately initiated.

In the above embodiments, the network-side device receives one or more pieces of the feature information available for the RA directly reported by the terminal, and the network-side device may subsequently optimize an RA resource configuration according to requirements of the terminal, which has a high availability.

In some optional embodiments, referring to FIG. 7B, which is a flow chart showing a method for receiving information according to an embodiment. The method may be performed by a network-side device and may include the following steps.

In step 701', a reporting request message is sent.

In an embodiment of the present invention, the reporting request message is used to request the terminal to report one or more pieces of the feature information available for the RA.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing.

In a possible implementation, one or more pieces of the feature information available for the RA may be random feature information available for the RA, or specified feature information available for the RA. The identification information may be an NSAG identifier, a radio access network slicing identifier, etc. The radio access network slicing identifier may be an S-NSSAI or an NSSAI, which is not limited in the present invention.

It should be noted that one or more pieces of the feature information available for the RA may be feature information that triggers the random access, or a feature that the terminal wants to implement an indication in advance via a specific RA resource, which are different from feature information supported by the RA ultimately initiated by the terminal. The feature information supported by the RA ultimately initiated by the terminal may include at least a part of one or more pieces of the feature information available for the RA.

In an embodiment of the present invention, the network-side device includes any network-side node, for example, the network-side node may be a CN-side node, an RAN-side node, etc., and which is not limited in the present invention.

In a possible implementation, the network-side device may send the reporting request message to the terminal to request to obtain one or more pieces of the feature information available for the RA in a case that the terminal having one or more pieces of the feature information available for the RA is determined based on the availability indication information reported by the terminal.

Optionally, the reporting request message may be carried in a UEInformationRequest message.

In a possible implementation, the reporting request message is used to request the terminal to report random feature information available for the RA.

In another possible implementation, the reporting request message may be used to request the terminal to report the specified feature information available for the RA.

In step 702', one or more pieces of the feature information available for the RA reported by the terminal is received based on the reporting request message.

In an embodiment of the present invention, the terminal may report one or more pieces of the feature information available for the RA via a UEInformationResponse message in a case that the reporting request message is carried in the UEInformationRequest message.

In a possible implementation, the reporting request message is used to request the terminal to report random feature information available for the RA. The network-side device may receive a null report reported by the terminal in a case that the terminal does not have one or more pieces of the feature information available for the RA.

In another possible implementation, the reporting request message is used to request the terminal to report the specified feature information available for the RA. The network-side device may receive a null report reported by the terminal in a case that the terminal does not have the specified feature information available for the RA.

In another possible implementation, the reporting request message is used to request the terminal to report random feature information available for the RA. The network-side device may receive random feature information available for the RA recorded and reported by the terminal based on the reporting request message in a case that the terminal has one or more pieces of the feature information available for the RA.

In another possible implementation, the reporting request message is used to request the terminal to report the specified feature information available for the RA. The network-side device may receive random feature information available for the RA recorded and reported by the terminal in a case that the terminal does not have the specified feature information available for the RA.

In another possible implementation, the reporting request message is used to request the terminal to report random feature information available for the RA. The network-side device may receive the specified feature information available for the RA reported by the terminal in a case that the terminal has the specified feature information available for the RA. The specified feature information available for the RA may be determined by the terminal.

It should be noted that one or more pieces of the feature information available for the RA reported by the terminal may be completely matched with the specified feature information available for the RA determined by the terminal. Alternatively, one or more pieces of the feature information available for the RA reported by the terminal may at least include the specified feature information available for the RA determined by the terminal. Alternatively, one or more pieces of the feature information available for the RA reported by the terminal may include at least part of the specified feature information determined by the terminal. In another possible implementation, the reporting request message is used to request the terminal to report the specified feature information available for the RA. The network-side device may receive the specified feature information available for the RA reported by the terminal in a case that the terminal has available feature information for the RA specified by the network-side device.

It should be noted that one or more pieces of the feature information available for the RA reported by the terminal may be completely matched with the specified feature information available for the RA requested to be reported by the network-side device. Alternatively, one or more pieces of the feature information available for the RA reported by the terminal may at least include the specified feature information available for the RA requested to be reported by the network-side device. Alternatively, one or more pieces of the feature information available for the RA reported by the terminal may include at least part of the specified feature information available for the RA requested to be reported by the network-side device.

In another possible implementation, the reporting request message is used to request the terminal to report random feature information available for the RA, or the reporting request message is used to request the terminal to report the specified feature information available for the RA. The network-side device may receive all feature information available for the RA reported by the terminal in a case that the terminal has one or more pieces of the feature information available for the RA.

In another possible implementation, the reporting request message is used to request the terminal to report random feature information available for the RA, or the reporting request message is used to request the terminal to report the specified feature information available for the RA. The network-side device may receive the feature information reported by the terminal that is not supported by the RA resource selected by the terminal in a case that the terminal has one or more pieces of the feature information available for the RA.

In an embodiment of the present invention, the terminal having one or more pieces of the feature information available for the RA means that the terminal has one or more pieces of available feature information for the RA, or the terminal has recorded one or more pieces of the feature information available for the RA. At this time, the terminal may report the availability indication information.

In the above embodiments, the network-side device may send the reporting request message, so that the terminal reports one or more pieces of the feature information available for the RA based on the reporting request message, and the network-side device may subsequently optimize an RA resource configuration according to requirements of the terminal, which has a high availability.

In some optional embodiments, referring to FIG. 8, which is a flow chart showing a method for receiving information according to an embodiment. The method may be performed by a network-side device and may include a following step.

In step 801, capability indication information is received. The capability indication information is used to indicate whether the terminal supports recording and reporting one or more pieces of the feature information available for the RA.

In an embodiment of the present invention, the feature information includes, but is not limited to, at least one of: an SDT; a RedCap device; an RAN slicing; or a CE.

Optionally, the RAN slicing includes, but is not limited to, at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

In a possible implementation, one or more pieces of the feature information available for the RA may be random feature information available for the RA, or specified feature information available for the RA.

It should be noted that one or more pieces of the feature information available for the RA are different from feature information supported by the RA ultimately initiated by the terminal. The feature information supported by the RA ultimately initiated by the terminal may include at least a part of one or more pieces of the feature information available for the RA.

In an embodiment of the present invention, the capability indication information is used to indicate whether the terminal supports recording and reporting one or more pieces of the feature information available for the RA. The network-side device includes any network-side node, for example, the network-side node may be a CN-side node, an RAN-side node, etc.

In a possible implementation, the network-side device may send the reporting request message to the terminal in a case that the network-side device determines, based on the capability indication information reported by the terminal, that the terminal supports recording and reporting one or more pieces of the feature information available for the RA, thereby receiving one or more pieces of the feature information available for the RA reported by the terminal based on the reporting request message in a case that the terminal has one or more pieces of the feature information available for the RA. The reporting request message is used to request the terminal to report one or more pieces of the feature information available for the RA. The specific implementation is similar to the above steps 701' to 702' and will not be repeated here.

In another possible implementation, the network-side device may determine that the terminal supports recording and reporting one or more pieces of the feature information available for the RA based on the capability indication information reported by the terminal. Furthermore, the network-side device may receive availability indication information, and the availability indication information is used to indicate that the terminal has one or more pieces of the feature information available for the RA. At this time, the network-side device sends a reporting request message to the terminal. After receiving the reporting request message sent by the network-side device, the terminal may report one or more pieces of the feature information available for the RA based on the reporting request message. The specific implementation is similar to the above steps 701' to 702' and will not be repeated here.

In the above embodiments, the network-side device may determine whether the terminal supports recording and reporting one or more pieces of the feature information available for the RA based on the capability indication information reported. The network-side device may subsequently optimize an RA resource configuration according to the capability and requirement of the terminal, which has a high availability.

In the following, the above methods provided in the present invention are further illustrated below with examples.

In example 1, a terminal reports availability indication information.

The terminal reports the availability indication information, and the availability indication information is used to indicate that the terminal has one or more pieces of feature information available for an RA.

The availability indication information may be reported based on each RA attempt, or may be reported based on each RA process, or may be reported based on each feature or feature combination.

The feature information includes at least one of: an SDT; a RedCap device; an RAN slicing; or a CE. The RAN slicing includes at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

The availability indication information may be reported in any of following manners.

In manner 1, in a case that the terminal is in a connected state, the terminal reports the availability indication information via a first message in a case that one or more pieces of the feature information available for the RA is recorded. The availability indication information is used to indicate that the terminal has one or more pieces of the feature information available for the RA. The first message may be at least one of: an RRC connection establishment complete message; an RRC reconfiguration complete message; an RRC re-establishment complete message; or an RRC recovery complete message.

In manner 2, after recording the feature information available for the RA, the terminal reports the availability indication information based on a first RA attempt, each RA attempt, or each RA process. The availability indication information is used to indicate that the terminal has one or more pieces of the feature information available for the RA. The availability indication information includes, but is not limited to, being reported via a UEAssistanceInformation message.

Optionally, a prohibit timer may be introduced, and the prohibit timer is started in a case that the terminal reports the availability indication information. The terminal may subsequently trigger reporting new availability indication information only in a case that the prohibit timer is not working. A timing duration of the prohibit timer may be agreed upon by a protocol or configured by a network-side device.

In manner 3, after recording one or more pieces of the feature information available for the RA, the terminal reports the availability indication information based on a first RA attempt, each RA attempt, or each RA process. The availability indication information is used to indicate that the terminal has one or more pieces of the feature information available for the RA.

The availability indication information is reported via an MAC CE. An RRC layer instructs an MAC layer to send the MAC CE. In a case that no available uplink resource exists, the MAC CE may trigger an SR, or may not allow triggering an SR. A priority of the MAC CE is lower than that of a BSR MAC CE.

In manner 4, after recording one or more pieces of the feature information available for the RA, the terminal reports the availability indication information based on a first RA attempt, each RA attempt, or each RA process. The availability indication information is used to indicate that the terminal has one or more pieces of the feature information available for the RA.

The availability indication information may be reported via a random record report. For example, the terminal reports the availability indication information to a network-side device in a case that the terminal performs an RLF-report reporting.

In the above embodiments, the terminal may report the availability indication information, and the availability indication information is used to indicate that the terminal has one or more pieces of the feature information available for the RA. The availability indication information allows the network-side device to determine that the terminal has one or more pieces of the feature information available for the RA, so that the network-side device configures one or more pieces of the feature information available for the RA reported by the terminal, which has a high availability.

In example 2, a terminal reports one or more pieces of feature information available for RA.

The terminal reports one or more pieces of the feature information available for the RA.

The feature information includes at least one of: an SDT; a RedCap device; an RAN slicing; or a CE. The RAN slicing includes at least one of: feature information used to indicate that a feature is the RAN slicing; or identification information used to identify the RAN slicing. The identification information may be an NSAG identifier, a radio access network slicing identifier, etc. The radio access network slicing identifier may be an S-NSSAI or an NSSAI, which is not limited in the present invention.

The reporting includes, but is not limited to, following manners.

In manner 1, the terminal directly reports one or more pieces of the feature information available for the RA.

As a possible implementation, the reporting is performed in a case that the terminal has one or more pieces of the feature information available for the RA.

As a possible implementation, the terminal directly reports, and in a case that the terminal does not have one or more pieces of the feature information available for the RA, a null report is reported.

In manner 2, the terminal reports one or more pieces of the feature information available for the RA according to a reporting request message sent by a network-side device.

Optionally, the reporting request message sent by the network-side device may be sent based on availability indication information of the terminal. That is, the network side sends the reporting request message to the terminal in a case that the terminal has one or more pieces of the feature information available for the RA, requesting to obtain one or more pieces of the feature information available for the RA.

The reporting request message may be carried in a UEInformationRequest, and the terminal reports one or more pieces of the feature information available for the RA via a UEInformationResponse message.

As a possible implementation, the reporting request message is used to request the terminal to send random feature information available for the RA. After receiving the reporting request message, the terminal reports random feature information available for the RA to the network-side device. For example, the terminal reports one or more pieces of the feature information available for the RA to the network-side device as a part of a record report.

Optionally, a null report may be reported in a case that the terminal does not have one or more pieces of the feature information available for the RA.

As a possible implementation, the reporting request message is used to request the terminal to report specified feature information available for the RA.

The terminal receives the reporting request message, and the terminal performs the reporting in a case that the terminal has specified feature information available for the RA requested to be reported by the reporting request message. Alternatively, the terminal receives the reporting request message and must perform the reporting, and a null report may be reported in a case that the terminal does not have specified feature information available for the RA requested to be reported by the reporting request message.

In the above embodiments, the terminal may report one or more pieces of the feature information available for the RA, and the network-side device may subsequently optimize an RA resource configuration according to requirements of the terminal, which has a high availability.

Furthermore, after successfully reporting one or more pieces of the feature information available for the RA, the terminal releases a locally stored record.

A UE may also release the locally stored record in a case that a last successful reporting of one or more pieces of the feature information available for the RA reaches a preset duration. The preset duration may be 48 hours or other values. The preset duration may be configured by the network-side device or agreed upon by a protocol.

Optionally, the terminal may report capability indication information of whether it supports recording and reporting the preset duration, and a network may decide whether to configure one or more pieces of the feature information available for the RA reported by the terminal based on the capability indication information.

Corresponding to the above embodiments of the application function implementation methods, the present invention also provides embodiments of application function implementation apparatus.

Referring to FIG. 9, which is a block diagram showing an apparatus for reporting information according to an illustrative embodiment, the apparatus is applied to a terminal and includes: a reporting module 901 configured to report specified information; in which the specified information is associated with one or more pieces of feature information available for a random access (RA).

Referring to FIG. 10, which is a block diagram showing an apparatus for receiving information according to an illustrative embodiment, the apparatus is applied to a network-side device and includes: a receiving module 1001 configured to receive specified information; in which the specified information is associated with one or more pieces of feature information available for a random access (RA).

Since the apparatus embodiments substantially correspond to the method embodiments, reference is made to the partial description of the method embodiments. The above-described apparatus embodiments are merely for the purpose of illustration, in which the above units described as separate components may be or may not be physically separated, and the components displayed as units may be or may not be physical units, that is, either located at one place or distributed onto a plurality of network elements. The object of solutions of the present invention may be achieved by some or all of the modules in accordance with practical requirements. It would be appreciated and executable by those skilled in the art without creative efforts.

Correspondingly, the present invention also provides a computer-readable storage medium, which has stored therein a computer program that is configured to execute any one of the above methods for reporting the information.

Correspondingly, the present invention also provides a computer-readable storage medium, which has stored therein a computer program that is configured to execute any one of the above methods for receiving the information.

Correspondingly, the present invention also provides a device for reporting information, which includes: a processor; and a memory for storing instructions executable by the processor. The processor is configured to execute any one of the methods for reporting the information described above on the terminal side.

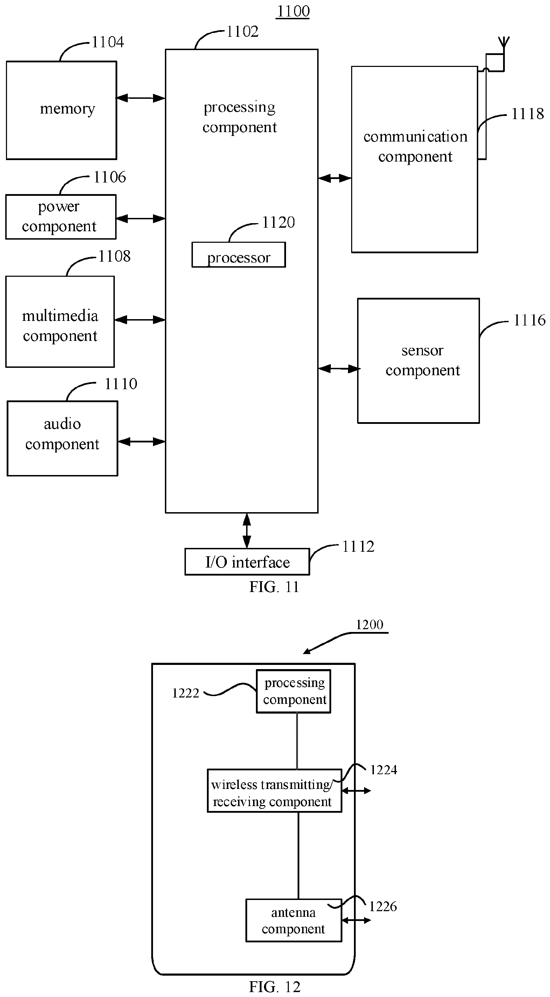

FIG. 11 is a block diagram showing a device 1100 for reporting information according to an illustrative embodiment. For example, the device 1100 may be a mobile phone, a tablet computer, an e-book reader, a multimedia player device, a wearable device, a vehicle-mounted user equipment, an iPad, a smart TV, or other terminals.

Referring to FIG. 11, the device 1100 may include one or more of the following components: a processing component 1102, a memory 1104, a power component 1106, a multimedia component 1108, an audio component 1110, an input/output (I/O) interface 1112, a sensor component 1116, and a communication component 1118.

The processing component 1102 typically controls overall operations of the device 1100, such as the operations associated with display, phone calls, data random accesses, camera operations, and recording operations. The processing component 1102 can include one or more processors 1120 to execute instructions to perform all or some of the steps in the above-described method for reporting the information. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102. For another example, the processing component 1102 may read executable instructions from the memory to implement the steps of the method for reporting the information provided in the above individual embodiments.

The memory 1104 is configured to store various types of data to support the operation of the device 1100. Examples of such data include instructions for any applications or methods operated on the device 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a display screen providing an output interface between the device 1100 and the user. In some embodiments, the multimedia component 1108 includes a front camera and/or a rear camera. The front camera and/or the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the device 1100 is in an operation mode, such as a call mode, a recording mode, and a voice recognition mode. The received audio signal may be further stored in the memory 1104 or transmitted via the communication component 1118. In some embodiments, the audio component 1110 further includes a speaker to output audio signals.

The I/O interface 1112 provides an interface between the processing component 1102 and peripheral interface modules, such as keyboards, click wheels, buttons, and the like. The buttons may include, but are not limited to, a home button, a volume button, a starting button, and a locking button.

The sensor component 1116 includes one or more sensors to provide status assessments of various aspects of the device 1100. For instance, the sensor component 1116 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1116 may include a proximity sensor configured to detect the presence of nearby objects without any physical contact. The sensor component 1116 may further include a light sensor, such as a CMOS or CCD image sensor, for use in imaging applications. In some embodiments, the sensor component 1116 may further include an accelerometer sensor, a gyroscope sensor, a magnetic sensor, a pressure sensor, or a temperature sensor.

The communication component 1118 is configured to facilitate communication, wired or wireless, between the device 1100 and other devices. The device 1100 can access a wireless network based on a communication standard, such as Wi-Fi, 2G, 3G, 4G, 5G or 6G or a combination thereof. In an illustrative embodiment, the communication component 1118 receives a broadcast signal or broadcast associated information from an external broadcast management system via a broadcast channel. In an illustrative embodiment, the communication component 1118 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing any one of the methods for reporting the information described above on the terminal side.

In an illustrative embodiment, there is also provided a non-transitory machine readable storage medium including instructions, such as included in the memory 1104, executable by the processor 1120 in the device 1100, for completing the above-mentioned method for reporting the information. For example, the non-transitory computer-readable storage medium may be a ROM, a random access memory (RAM), a CD-ROM, a magnetic tape, a floppy disc, an optical data storage device, and the like.

Correspondingly, the present invention also provides a device for receiving information, which includes: a processor; and a memory for storing instructions executable by the processor. The processor is configured to execute any one of the methods for receiving the information described above on the network-side device side.

As shown in FIG. 12, which is a schematic block diagram showing a device 1200 for receiving information according to an illustrative embodiment, the device 1200 may be provided as a network-side device. Referring to FIG. 12, the device 1200 includes a processing component 1222, a wireless transmitting/receiving component 1224, an antenna component 1226, and a signal processing portion specific to the wireless interface. The processing component 1222 may further include at least one processors.

One processor in the processing components 1222 may be configured to implement any one of the above methods for receiving the information.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present invention as come within known or customary practice in the art. It is intended that the specification and examples be considered as illustrative only, with a true scope and spirit of the disclosure being indicated by the following claims.

It will be appreciated that the present invention is not limited to the exact construction that has been described above and illustrated in the accompanying drawings, and that various modifications and changes can be made without departing from the scope thereof. It is intended that the scope of the disclosure only be limited by the appended claims.

## Claims

1. A method for reporting information, performed by a terminal, comprising:
reporting specified information; wherein the specified information is associated with one or more pieces of feature information available for a random access (RARA).

2. The method according to claim 1, wherein reporting the specified information comprises at least one of:
reporting availability indication information in a case that the terminal has one or more pieces of the feature information available for the RA; wherein the availability indication information is used to indicate that the terminal has one or more pieces of the feature information available for the RA; or
reporting one or more pieces of the feature information available for the RA in a case that the terminal has one or more pieces of the feature information available for the RA.

3. The method according to claim 2, wherein reporting the availability indication information comprises:
the terminal entering a connected state and reporting the availability indication information via a first message; or
reporting the availability indication information via a second message.

4. The method according to claim 3, wherein the first message is one of:
a radio resource control (RRC) connection establishment complete message;
an RRC reconfiguration complete message;
an RRC re-establishment complete message; or
an RRC recovery complete message.

5. The method according to claim 3, wherein the second message is one of:
a terminal assistance information message;
a medium access control control element (MAC CE); or
a record report.

6. The method according to claim 2, further comprising:
reporting a null report in a case that the terminal does not have one or more pieces of the feature information available for the RA.

7. The method according to claim 2, further comprising:
receiving a reporting request message; wherein the reporting request message is used to request the terminal to report one or more pieces of the feature information available for the RA.

8. The method according to claim 7, wherein reporting one or more pieces of the feature information available for the RA comprises:
reporting one or more pieces of the feature information available for the RA based on the reporting request message.

9. The method according to claim 7, further comprising:
reporting capability indication information; wherein the capability indication information is used to indicate whether the terminal supports recording and reporting one or more pieces of the feature information available for the RA.

10. The method according to claim 7, wherein receiving the reporting request message comprises:
receiving the reporting request message sent by a network-side device in a case that the terminal supports recording and reporting one or more pieces of the feature information available for the RA.

11. The method according to any one of claims 1 to 10, wherein one or more pieces of the feature information available for the RA is random feature information available for the RA, or specified feature information available for the RA.

12. The method according to any one of claims 2 to 10, wherein reporting one or more pieces of the feature information available for the RA comprises at least one of:
reporting random feature information available for the RA;
reporting specified feature information available for the RA;
reporting all feature information available for the RA; or
reporting feature information that is not supported by an RA resource selected by the terminal.

13. The method according to any one of claims 1 to 10, wherein the feature information comprises at least one of:
a small data transmission (SDT);
a reduced capability (RedCap) device;
a radio access network (RAN) slicing; or
a coverage enhancement (CE).

14. The method according to claim 13, wherein the RAN slicing feature information comprises at least one of:
feature information used to indicate that a feature is the RAN slicing; or
identification information used to identify the RAN slicing.

15. A method for receiving information, performed by a network-side device, comprising:
receiving specified information; wherein the specified information is associated with one or more pieces of feature information available for a random access (RA).

16. The method according to claim 15, wherein receiving the specified information comprises at least one of:
receiving availability indication information reported by a terminal in a case that the terminal has one or more pieces of the feature information available for the RA; wherein the availability indication information is used to indicate that the terminal has one or more pieces of the feature information available for the RA; or
receiving one or more pieces of the feature information available for the RA reported by a terminal in a case that the terminal has one or more pieces of the feature information available for the RA.

17. The method according to claim 16, wherein receiving the availability indication information reported by the terminal in a case that the terminal has one or more pieces of the feature information available for the RA comprises:
receiving the availability indication information reported by the terminal via a first message in a case that the terminal has one or more pieces of the feature information available for the RA and the terminal enters a connected state; or
receiving the availability indication information reported by the terminal via a second message in a case that the terminal has one or more pieces of the feature information available for the RA.

18. The method according to claim 17, wherein the first message is one of:
an RRC connection establishment complete message;
an RRC reconfiguration complete message;
an RRC re-establishment complete message; or
an RRC recovery complete message.

19. The method according to claim 17, wherein the second message is one of:
a terminal assistance information message;
a medium access control control element (MAC CE); or
a record report.

20. The method according to claim 16, further comprising:
receiving a null report reported by the terminal in a case that the terminal does not have one or more pieces of the feature information available for the RA.

21. The method according to claim 16, further comprising:
sending a reporting request message; wherein the reporting request message is used to request the terminal to report one or more pieces of the feature information available for the RA.

22. The method according to claim 21, wherein receiving one or more pieces of the feature information available for the RA comprises:
receiving one or more pieces of the feature information available for the RA reported by the terminal based on the reporting request message.

23. The method according to claim 21, further comprising:
receiving capability indication information; wherein the capability indication information is used to indicate that the terminal supports recording and reporting one or more pieces of the feature information available for the RA.

24. The method according to claim 21, wherein sending the reporting request message comprises:
sending the reporting request message in response to the terminal supports recording and reporting one or more pieces of the feature information available for the RA.

25. The method according to any one of claims 15 to 24, wherein one or more pieces of the feature information available for the RA is random feature information available for the RA, or specified feature information available for the RA.

26. The method according to any one of claims 16 to 24, wherein receiving one or more pieces of the feature information available for the RA reported by the terminal in a case that the terminal has one or more pieces of the feature information available for the RA comprises at least one of:
receiving random feature information available for the RA reported by the terminal in a case that the terminal has one or more pieces of the feature information available for the RA;
receiving specified feature information available for the RA reported by the terminal in a case that the terminal has one or more pieces of the feature information available for the RA;
receiving all feature information available for the RA reported by the terminal in a case that the terminal has one or more pieces of the feature information available for the RA; or
receiving feature information reported by the terminal that is not supported by an RA resource selected by the terminal in a case that the terminal has one or more pieces of the feature information available for the RA.

27. The method according to any one of claims 15 to 24, wherein the feature information comprises at least one of:
a small data transmission (SDT);
a reduced capacity (RedCap) device;
a radio access network (RAN) slicing; or
a coverage enhancement (CE).

28. The method according to claim 27, wherein the RAN slicing comprises at least one of:
feature information used to indicate that a feature is the RAN slicing; or
identification information used to identify the RAN slicing.

29. An apparatus for reporting information, applied to a terminal, comprising:
a reporting module configured to report specified information; wherein the specified information is associated with one or more pieces of feature information available for a random access (RA).

30. An apparatus for receiving information, applied to a network-side device, comprising:
a receiving module configured to receive specified information; wherein the specified information is associated with one or more pieces of feature information available for a random access (RA).

31. A computer-readable storage medium, having stored therein a computer program that is configured to execute the method for reporting the information according to any one of claims 1 to 14.

32. A computer-readable storage medium, having stored therein a computer program that is configured to execute the method for receiving the information according to any one of claims 15 to 28.

33. A device for reporting information, comprising:
a processor; and
a memory for storing instructions executable by the processor;
wherein the processor is configured to execute the method for reporting the information according to any one of claims 1 to 14.

34. A device for receiving information, comprising:
a processor; and
a memory for storing instructions executable by the processor;
wherein the processor is configured to execute the method for receiving the information according to any one of claims 15 to 28.
